# EUROPÄISCHE PATENTSCHRIFT

(11) **EP 2 283 087 B1**
(45) Veröffentlichungstag und Bekanntmachung des Hinweises auf die Patenterteilung: **26.02.2014**
(21) Anmeldenummer: 09741882.6
(22) Anmeldetag: 06.05.2009
(51) Int. Cl.: C09D 5/44, C09D 201/02

(54) **KATHODISCHER ELEKTROTAUCHLACK ENTHALTEND VINYLPYRROLIDON-COPOLYMER**
CATHODIC ELECTRODEPOSITION PAINT CONTAINING A VINYLPYRROLIDONE COPOLYMER
VERNIS ÉLECTROPHORÉTIQUE CATHODIQUE POUR PEINTURE PAR IMMERSION CONTENANT UN COPOLYMÈRE DE VINYLPYRROLIDONE

(30) Priorität: 07.05.2008 DE 102008022464
(43) Veröffentlichungstag der Anmeldung: 16.02.2011
(73) Patentinhaber: BASF Coatings GmbH, 48165 Münster (DE)
(72) Erfinder: BAUMGART, Hubert, 48163 Münster (DE); HÖFFMANN, Udo, 48317Drensteinfurt (DE); ROSS-LIPPKE, Iris, 48308 Senden (DE); HEFFELS, Stephan, 48165 Münster (DE)
(74) Vertreter: Leifert & Steffan
(86) Internationale Anmeldenummer: PCT/EP2009/003239
(87) Internationale Veröffentlichungsnummer: WO 2009/135663

(56) Entgegenhaltungen:
- EP-B- 0 505 445
- WO-A-00/64990
- WO-A-98/33835
- US-B1- 6 475 366

## Beschreibung

Die vorliegende Erfindung betrifft eine wäßrige Beschichtungszusammensetzung enthaltend mindestens ein in Wasser dispergierbares, kationische Gruppen enthaltendes organisches Bindemittel, und 0,05 - 10 Gew.%, bezogen auf den Festkörpergehalt der wäßrigen Beschichtungszusammensetzung, eines wasserverdünnbaren Vinylpyrrolidon-Copolymers. Die vorliegende Erfindung betrifft weiterhin ein Verfahren zur Herstellung dieser Beschichtungszusammensetzung sowie deren Verwendung.

Beschichtungszusammensetzungen der genannten Art sind beispielsweise aus der EP 1171530 A1 bekannt. Sie werden in der Regel als kathodisch abscheidbare Elektrotauchlacke eingesetzt. In der EP 1171530 A1 werden Elektrotauchlack-Zusammensetzungen beschrieben, die Lackierungen mit möglichst wenigen störenden Kratern bei gleichzeitig guter Haftung nachfolgender Lackschichten liefern. Die Verminderung der Krateranzahl wird durch den Zusatz von Homo- oder Copolymeren auf Basis von Polyvinylpyrrolidon erzielt, wobei verschiedenste Monomere als Comonomere verwendet werden können. Eine besonders gute Antikraterwirkung wird dabei von Polymeren mit einem Molekulargewicht > 200.000 erreicht.

In der EP 0358221 A2 werden Elektrotauchbad-Überzugszusammensetzungen beschrieben, die Lackierungen mit möglichst wenigen störenden Kratern bei unverändert guter Schlagfestigkeit, Haftung nachfolgender Lackschichten und Oberflächenbeschaffenheit liefern. Hierzu werden der Beschichtungszusammensetzung Polymermikroteilchen als Antikratermittel zugesetzt. Die Polymermikroteilchen weisen eine Teilchengröße von 0,01 bis 10 µm auf und können als Homopolymerisate oder Copolymerisate hergestellt werden. Die Teilchengrößenverteilung der Mikroteilchen hat dabei einen großen Einfluss auf die Antikraterwirkung. Eine besonders gute Antikraterwirkung wird bei bimodaler oder multimodaler Verteilung der Teilchengrößen, d.h. bei der Kombination von zwei oder mehr Mikroteilchen-Populationen mit verschiedenen Teilchengrößen, erzielt.

US 5,089,101 beschreibt eine kationische Elektrotauchlack-Zusammensetzung, die ein Neutralisationsprodukt oder quartäres Ammoniumsalz eines kammförmigen Copolymers aus a) einem ethylenisch ungesättigtem Monomer mit einer endständigen Kohlenwasserstoffkette von mindestens 8 Kohlenstoffatomen, b) mindestens einem näher spezifizierten kationischen (Meth)Acryl-Monomer, c) einem 1-Vinyl-2-Pyrrolidon und d) einem weiteren alpha, beta-ungesättigten Monomer enthält. Diese kationische Elektrotauchlack-Zusammensetzung liefert Lackierungen mit ausreichender Wetterfestigkeit und gutem Korrosionsschutz.

Üblicherweise erfüllen die heute im Einsatz befindlichen kathodisch abscheidbaren Elektrotauchlacke hohe Anforderungen an Korrosionsschutz, Kantenschutz, Oberflächenqualität und andere Eigenschaften, wie z.B. Schleifbarkeit. Indes wird heute überdies verlangt, dass eine kathodische Tauchlackierung sehr wenige Ausläufer (Läufer und Lacknasen aus Spalten und Hohlräumen) aufweist. Bei der kathodischen Elektrotauchlack-Beschichtung beispielsweise von Karossen kann Badmaterial in Nischen und Hohlräume, wie z.B. in die Zwischenräume von Blechnähten, eindringen. Wird dieses Material beim Spülen nicht vollständig entfernt, tritt es beim Einbrennen des Lacks aus der Naht heraus und führt zu plastischen Läuferspuren (Ausläufer-Markierungen) im Elektrotauchlack-Film. Starke Ausläufermarkierungen müssen in der Praxis durch Schleifen entfernt werden. Dieser zusätzliche Schleifprozess verursacht erhöhte Kosten und einen erhöhten Zeitaufwand im Produktionsprozess. Trotz verschiedenster technischer Massnahmen, wie z.B. wiederholtem Tauchen des lackierten Substrats in VE-Wasser, mechanischer Bewegung des Lackiergutes und/oder Vortrocknen des Lackiergutes oder Teilen davon in einem Luftstrom, ist es bisher nicht gelungen, diesen Fehler sicher zu vermeiden.

Es bestand daher die Aufgabe, eine zur kathodischen Elektrotauchlackierung geeignete Beschichtungszusammensetzung bereitzustellen, die eine verminderte Neigung zur Bildung von Ausläufern (Läufer und Lacknasen aus Spalten und Hohlräumen) aufweist, so dass ein nachträglicher Schleifprozess zur Entfernung von Ausläufermarkierungen entfallen kann. Hierdurch kann die Produktion entsprechender lackierter Substrate zeit- und kostengünstiger gestaltet werden.

Diese Aufgabe wird überraschenderweise durch Bereitstellen einer wäßrigen Beschichtungszusammensetzung, enthaltend (A) mindestens ein in Wasser dispergierbares, kationische Gruppen enthaltendes organisches Bindemittel, und (B) 0,05 - 10 Gew.%, bezogen auf den Festkörpergehalt der wäßrigen Beschichtungszusammensetzung, eines wasserverdünnbaren Vinylpyrrolidon-Copolymers, wobei das Vinylpyrrolidon-Copolymer (B) Vinylpyrrolidon-Monomer-Einheiten und Vinylacetat-Monomer-Einheiten in einem molaren Verhältnis von 0,3 : 0,7 bis 0,7 : 0,3 aufweist und ein gewichtsmittleres Molekulargewicht von weniger als 200.000 g/mol besitzt, gelöst.

Die erfindungsgemäße Beschichtungszusammensetzung weist vorzugsweise einen Festkörpergehalt von 12 - 25 Gew.% , besonders bevorzugt von 15 - 22 Gew.%, insbesondere bevorzugt von 18 - 20 Gew.%, jeweils bezogen auf die gesamte erfindungsgemäße Beschichtungszusammensetzung, auf. Der Festkörpergehalt wird als nichtflüchtiger Massenanteil nach Trocknung bei 180°C für 30 Minuten bestimmt.

Die erfindungsgemäße Beschichtungszusammensetzung weist vorzugsweise einen pH-Wert von 4,8 - 6,5, besonders bevorzugt von 5,2 - 6,2, insbesondere bevorzugt von 5,5 - 6,0, auf. Der pH-Wert kann mit den hierzu üblicherweise verwendeten und bekannten Methoden, wie beispielsweise potentiometrisch, bestimmt werden.

Die erfindungsgemäße Beschichtungszusammensetzung weist vorzugsweise eine elektrische Leitfähigkeit von 0,8 - 2,5 mS/cm, besonders bevorzugt von 1,1 - 2,3 mS/cm, insbesondere bevorzugt von 1,3 - 1,9 mS/cm, auf. Die Leitfähigkeit kann mit den hierzu üblicherweise verwendeten und bekannten Methoden bestimmt werden.

Vorzugsweise handelt es sich bei der erfindungsgemäßen Beschichtungszusammensetzung um einen kathodisch abscheidbaren Elektrotauchlack. Kathodisch abscheidbare Elektrotauchlacke sind für den Einsatz in der kathodischen Elektrotauchlackierung (KTL) geeignet. Die KTL ist ein vor allem zum Grundieren häufig angewandtes Lackierverfahren, bei dem in Wasser gelöste oder dispergierte, kationische Gruppen tragende Bindemittel mit Hilfe von Gleichstrom auf elektrisch leitende Körper aufgebracht werden. Hierzu wird das zu beschichtende Substrat als Kathode geschaltet und in den kathodisch abscheidbaren Elektrotauchlack eingetaucht. Bei Anlegen eines Gleichstroms zwischen dem als Kathode geschalteten Substrat und einer ebenfalls in dem Elektrotauchlack befindlichen Anode gelangen in einer diffusionskontrollierten Grenzschicht die geladenen Lackmicellen bzw. Dispersionsteilchen an die jeweils entgegengesetzt geladene Elektrode, um dort durch pH-Änderung infolge der elektrolytischen Zersetzung des Wassers ausgefällt zu werden. Ist die Oberflächenladung der Lackmicellen bzw. Dispersionsteilchen positiv, so erfolgt die Abscheidung an der Kathode, d.h. auf dem als Kathode geschalteten Substrat. Der abgeschiedene Lackfilm hat einen hohen Festkörpergehalt und wird üblicherweise nach dem Entnehmen des Substrats aus dem Tauchbecken und eventuellen Reinigungsschritten durch Einbrennen vernetzt.

Die erfindungsgemäße Beschichtungszusammensetzung enthält vorzugsweise 60 - 95 Gew.%, besonders bevorzugt 75 - 90 Gew.%, insbesondere bevorzugt 80 - 85 Gew.%, bezogen auf den Festkörpergehalt der Beschichtungszusammensetzung, mindestens eines in Wasser dispergierbaren, kationische Gruppen enthaltenden organischen Bindemittels (A). Die Auswahl des oder der Bindemittel (A) unterliegt grundsätzlich keinen Einschränkungen, so dass prinzipiell jedes in Wasser dispergierbare, kationische Gruppen enthaltende organische Bindemittel geeignet ist.

Vorzugsweise enthält mindestens ein Bindemittel (A) primäre, sekundäre, tertiäre oder quartäre Amino- und/oder Ammoniumgruppen.

Besonders bevorzugt werden als Bindemittel (A) aminmodifizierte Epoxidharze eingesetzt.

Geeignete aminmodifizierte Epoxidharze sind beispielsweise die Addukte von modifizierten oder unmodifizierten Polyepoxiden mit primären oder sekundären Aminen (beschrieben beispielsweise in EP 1171530 A1, Seite 8, Zeile 10 bis Seite 9, Zeile 2; und in US 5236564, Seite 1, Zeile 44 bis Seite 3, Zeile 49).

Geeignete Polyepoxide sind beispielsweise Polyglycidylether, die aus Polyphenolen und Epihalohydrin, insbesondere Epichlorhydrin, erhältlich sind. Als Polyphenole sind insbesondere Bisphenol A und Bisphenol F bevorzugt. Weitere geeignete Polyphenole sind beispielsweise 4,4'-Dihydroxybenzophenon, Bis-(4-hydroxyphenyl)-1,1-ethan, Bis-(4-hydroxyphenyl)-1,1-isobut.an, Bis-(4-hydroxy-tertiär-butylphenyl)-2,2'-propan, Bis(2-hydroxynaphthyl)-methan, 1,5-Dihydroxynaphthalin und phenolische Novolakharze. Weitere geeignete Polyepoxide sind Polyglycidylether von mehrwertigen Alkoholen, wie z.B. Ethylenglykol, Diethylenglykol, Triethylengiykol, 1,2-Propylenglykol, 1,4-Propylenglykol, 1,5-Pentandiol, 1,2,6-Hexantriol, Glycerin und Bis(4-hydroxycyclohexyl-)2,2-propan. Es können auch Polyglycidylester von Polycarbonsäuren, wie z.B. Oxalsäure, Bernsteinsäure, Glutarsäure, Terephthalsäure, Hexahydrophthalsäure, Isophthalsäure. 2,6-Napththalindicarbonsäure, eingesetzt werden. Ferner sind Hydantoinepoxide, epoxidiertes Polybutadien und Polyepoxidverbindungen geeignet, die man durch Epoxidierung einer olefinisch ungesättigten aliphatische Verbindung erhält.

Unter modifizierten Polyepoxiden werden Polyepoxide verstanden, in denen ein Teil der reaktionsfähigen Gruppen mit einer modifizierenden Verbindung umgesetzt worden ist. Als Beispiele für modifizierende Verbindungen werden genannt:
a) Carboxylgruppenhaltige Verbindungen, wie gesättigte oder ungesättigte Monocarbonsäuren (z.B. Benzoesäure, 2-Ethylhexansäure, Versatiesäure®), aliphatische, cycloaliphatische und/oder aromatische Dicarbonsäuren verschiedener Kettenlänge (z.B. Adipinsäure, Sebacinsäure, Isophthalsäure oder dimere Fettsäuren), Hydroxyalkylcarbonsäuren (z.B. Milchsäure, Dimethylolpropionsäure) sowie carboxylgruppenhaltige Polyester, oder
b) aminogruppenhaltige Verbindungen, wie Dimethylamin oder Ethylhexylamin oder Diamine mit sekundären Amingruppen. z.B. N,N'-Dialkylalkylendiamine, wie Dimethylethylendiamin, N,N'-Dialkylpalyoxyalkylenamine, wie N,N'-Dimethylpolyoxy-prapylendiamin, cyanalkylierte Alkylendiamine, wie Bis-N,N'-Cyanethyl-ethylendiamin, cyanalkylierte Polyoxyalkylenamine, wie Bis-N,N'-Cyanethyl-polyoxypropylendiamin, Polyaminosamide, wie z.B. Versarnide®, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren oder das Umsetzungsprodukt von einem Mol Diaminohexan mit zwei Molen Monoglycidylether oder Monoglycidylester, speziell Glycidylester alpha-verzweigter Fettsäuren wie der Versaticsäure, oder
c) hydroxylgruppenhaltige Verbindungen, wie Neopentylglykol, Bis-ethoxyliertes Neopentylglykol, Hydroxypivalinsäureneopentylglykolester, Dimethylhydantoin-N,N'-diethanol, Hexandiol-1,6, Hexandiol-2,5, 1,4-Bis-(hydroxymethyl)-cyclohexan, 1,1-Isopropyliden-bis-(p-phenoxy)-2-propanol, Trimethylolpropan, Pentaerythrit, oder Aminoalkohole, wie Triethanolamin, Methyldiethanolamin oder hydroxylgruppenhaltige Alkylketimine, wie Aminomethylpropandiol-1,3-methyl-isobutylketimin oder Tris-(hydroxymethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte, oder
d) gesättigte oder ungesättigte Fettsäuremethylester, die in Gegenwart von Natriummethylat mit Hydroxylgruppen der Epoxidharze umgeestert werden.

Zur Adduktbildung mit Polyepoxiden geeignete primäre und/oder sekundäre Amine sind zum Beispiele Mono- und Dialkylamine, wie Methylamin, Ethylamin, Propylamin, Butylamin, Dimethylamin, Diethylamin, Dipropylamin, Methylbutylamin und dergleichen. Geeignet sind ebenfalls Alkanolamine, wie z.B. Methylethanolamin, Diethanolamin und dergleichen. Ferner sind Dialkylaminoalkylamine, wie z.B. Dimethylaminoethylamin, Diethylaminopropylamin, Dimethylaminopropylamin und dergleichen geeignet. In den meisten Fällen werden niedermolekulare Amine verwendet, jedoch ist es auch möglich, höhermolekulare Monoamine anzuwenden. Die Amine können auch noch andere Gruppen enthalten, jedoch sollen diese die Umsetzung des Amins mit der Epoxidgruppe nicht stören und auch nicht zu einer Gelierung der Reaktionsmischung führen. Bevorzugt werden sekundäre Amine zur Adduktbildung mit Polyepoxiden eingesetzt.

Die für die elektrische Abscheidung erforderlichen Ladungen können durch Protonisierung mit wasserlöslichen Säuren (z.B. Borsäure, Ameisensäure, Milchsäure, Essigsäure) erzeugt werden.

Eine weitere Möglichkeit zur Einführung kationischer Gruppen besteht in der Umsetzung von Epoxidgruppen mit Aminsalzen.

Die aminmodifizierten Epoxidharze können sowohl als fremdvernetzende Kunstharze als auch als selbstvernetzende Kunstharze eingesetzt werden. Selbstvernetzende Kunstharze können beispielsweise durch chemische Modifikation der aminmodifizierten Epoxidharze erhalten werden, z.B. dadurch, dass das aminmodifizierte Epoxidharz mit einem teilblockierten Polyisocyanat, das im Durchschnitt eine freie Isocyanatgruppe pro Molekül besitzt und dessen blockierte Isocyanatgruppen erst bei erhöhten Temperaturen entblockt werden, umgesetzt wird.

Bevorzugt werden fremdvernetzende aminmodifizierte Epoxidharze in Kombination mit einem geeigneten Vernetzungsmittel, hierin auch als "Vernetzer" bezeichnet, eingesetzt. Beispiele für geeignete Vernetzer sind Phenoplaste, polyfunktionelle Mannichbasen, Melaminharze, Benzoguanaminharze und blockierte Polyisocyanate. Bevorzugt werden als Vernetzer blockierte Polyisocyanate eingesetzt:

Als blockierte Polyisocyanate können beliebige Polyisocyanate verwendet werden, bei denen die Isocyanatgruppen mit einer Verbindung umgesetzt worden sind, so dass das gebildete blockierte Polyisocyanat, gegenüber Hydroxyl- und Amingruppen bei Raumtemperatur beständig ist, bei erhöhten Temperaturen, in der Regel im Bereich von etwa 90°C bis etwa 300°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis 36, insbesondere etwa 8 bis etwa 15 Kohlenstoffatome enthalten. Beispiele geeigneter Diisocyanate sind Hexamethylendiisocyanat, 2,4-Toluylendiisocyanat, 2,6-Toluylendiisocyanat und 1-Isocyanatomethyl-5-isocyanato-1,3,3,-trimethylcyclohexan. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten verwenden. Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,5,5-Trimethylhexyl-, Decyl- und Laurylalkohol; cycloaliphatische Alkohole, wie Cyclopentanol und Cyclohexanol aromatische Alkylalkohole, wie Phenylcarbinol und Methylphenylcarbinol,

Andere geeignete Blockierungsmittel sind Hydroxylamine, wie Ethanolamin, Oxime, wie Methylethylketonoxim, Acetonoxim und Cyclohexanonoxim oder Amine, wie Dibutylamin und Diisopropylamin. Die genannten Polyisocyanate und Blockierungsmittel können bei geeigneten Mengenverhältnissen auch zur Herstellung der oben erwähnten teilblockierten Polyisocyanate verwendet werden.

Ganz besonders bevorzugt wird mindestens ein Bindemittel (A) eingesetzt, dass in einer wässrigen Bindemitteldispersion enthalten ist, welche erhältlich ist durch
i) Umsetzung
   1) eines Vorproduktes, das unter Zusatz von Phosphinen und/oder Phosphinsalzen als Katalysator herstellbar ist aus a) einer Diepoxidverbindung oder einem Gemisch von Diepoxidverbindungen und b) Monophenol, Diphenol oder einem Gemisch von Mono- und Diphenolen
   2) mit wenigstens einem organischen Amin oder einer Mischung aus organischen Aminen bei auf 60 bis 130°C reduzierten Zugabetemperaturen zu einem Epoxid-Amin-Addukt,
ii) anschliessende oder gleichzeitige Umsetzung der sekundären Hydroxylgruppen, die bei der Umsetzung der Komponenten a) und b) gebildet worden sind, mit Epoxidgruppen des Epoxid-Amin-Adduktes aus der Stufe i) bei einer Temperatur von 110 bis 150°C,
iii) Zusatz eines Vernetzungsmittels oder eines Gemischs verschiedener Vernetzungsmittel bei einer Temperatur von < 50°C,
iv) Neutralisierung und
v) Dispergierung der in den Stufen i) bis iv) erhaltenen Mischung in Wasser.

Diese Bindemitteldispersion ist in der EP 0961797 B1 beschrieben.

Die erfindungsgemäße Beschichtungszusammensetzung enthält 0,05 - 10 Gew.%, bevorzugt 0,1 - 5 Gew.%, besonders bevorzugt 0,2 - 1 Gew.%, bezogen auf den Festkörpergehalt der wässrigen Beschichtungszusammensetzung, eines wasserverdünnbaren Vinylpyrrolidon-Copolymers (B).

Das Vinylpyrrolidon-Copolymer (B) besitzt ein gewichtsmittleres Molekulargewicht von weniger als 200.000 g/mol, vorzugsweise von 30.000 - 170.000 g/mol, besonders bevorzugt von 100.000 - 150.000 g/mol, wobei die Bestimmung des gewichtsmittleren Molekulargewichts durch Gelpermeationschromatographie unter Verwendung von Styrol als Standard erfolgt (beispielsweise nach DIN 55672-1 (02.1995) mit Tetrahydrofuran als Elutionsmittel).

Das Vinylpyrrolidon-Copolymer (B) weist Vinylpyrrolidon-Monomer-Einheiten und Vinylacetat-Monomer-Einheiten in einem molaren Verhältnis von 0,3 : 0,7 bis 0,7 0,3, bevorzugt von 0,4 : 0,6 bis 0,6 : 0,4 auf.

Das Vinylpyrrolidon-Copolymer (B) kann neben Vinylpyrrolidon-Monomer-Einheiten und Vinylacetat-Monomer-Einheiten auch Einheiten mindestens eines weiteren monoethylenisch ungesättigten Monomers aufweisen. Vorzugsweise weist das Vinylpyrrolidon-Copolymer (B), jeweils bezogen auf das Gesamtgewicht des Vinylpyrrolidon-Copolymers (B), nicht mehr als 20 Gew.-% an weiteren Monomeren, besonders bevorzugt nicht mehr als 10 Gew.-% an weiteren Monomeren, und ganz besonders-bevorzugt keine weiteren Monomere neben Vinylpyrrolidon-Monomer-Einheiten und Vinylacetat-Monomer-Einheiten auf.

Die Herstellung des Vinylpyrrolidon-Copolymers (B) kann beispielsweise durch radikalische Polymerisation erfolgen, welche thermisch, photochemisch (beispielsweise durch UV-Licht) oder chemisch nach Zugabe entsprechender Radikalbildner, beispielsweise von Peroxiden, in Gang gesetzt werden kann. Als Ausgangsstoffe sind Vinylpyrrolidon, Vinylacetat und gegebenenfalls weitere (Vinyl)Monomere geeignet.

Die erfindungsgemäße wäßrige Beschichtungszusammensetzung kann weitere Zusatzstoffe wie z.B. Vernetzer, Pigmente, Weichmacher, Füllstoffe, Netzmittel, enthalten. Insbesondere kann die erfindungsgemäße Beschichtungszusammensetzung ein oder mehrere Vernetzer und/oder ein oder mehrere Pigmente enthalten.

Bevorzugt enthält die erfindungsgemäße Beschichtungszusammensetzung 18 bis 28 Gew.%, besonders bevorzugt 22 - 27 Gew.%, insbesondere bevorzugt 24 - 26 Gew.%, bezogen auf den Festkörpergehalt der Beschichtungszusammensetzung, mindestens eines Vernetzers. Besonders bevorzugt enthält die erfindungsgemäße Beschichtungszusammensetzung 18 bis 28 Gew.%, besonders bevorzugt 22 - 27 Gew.%, insbesondere bevorzugt 24 - 26 Gew.%, bezogen auf den Festkörpergehalt der Beschichtungszusammensetzung, mindestens eines blockierten (Poly)isocyanats als Vernetzer.

Bevorzugt enthält die erfindungsgemäße Beschichtungszusammensetzung 5 bis 40 Gew.%, besonders bevorzugt 10 - 25 Gew.%, insbesondere bevorzugt 15 - 20 Gew.%, bezogen auf den Festkörpergehalt der Beschichtungszusammensetzung, mindestens eines Pigments.

Geeignete Pigmente sind beispielsweise Weißpigmente wie Titandioxid, Aluminiumsilikat, Siliciumdioxid, Zinkoxid, Zinksulfid, Bariumsulfat, Calciumcarbonat, Magnesiumcarbonat und Magnesiumsilikat, oder Schwarzpigmente, wie Russ, oder beispielsweise auch farbige Pigmente. Zu den farbigen Pigmenten zählen beispielsweise anorganische Buntpigmente, wie Eisenoxide oder Chromoxide, und organische Buntpigmente, wie beispielsweise Azopigmente, Triphenylmethanpigmente, indigoide Pigmente, Metallkomplexpigmente, Isoindolinone, Anthrachinone, Perylen- und Perinon-Pigmente, Dioxazin-Pigmente, Chinophthalone, Diketopyrrolopyrrol oder Pyrazolochinazolon-Pigmente.

Ein weiterer Gegenstand der vorliegenden Erfindung ist ein Verfahren zur Herstellung der erfindungsgemäßen Beschichtungszusammensetzung. Die erfindungsgemäße Beschichtungszusammensetzung kann hergestellt werden, indem i) mindestens ein in Wasser dispergierbares, kationische Gruppen enthaltendes organisches Bindemittel (A) in einer wäßrigen Lösung dispergiert wird, wodurch eine wäßrige Bindemitteldispersion erhalten wird, ii) die wäßrige Bindemitteldispersion mit 0,05 - 10 Gew.%, bezogen auf den Festkörpergehalt der wäßrigen Beschichtungszusammensetzung, eines wasserverdünnbaren Vinylpyrrolidon-Copolymers (B) mit einem gewichtsmittleren Molekulargewicht von weniger als 200.000 g/mol enthaltend Vinylpyrrolidon-Monomer-Einheiten und Vinylacetat-Monomer-Einheiten in einem molaren Verhältnis von 0,3 : 0,7 bis 0,7 : 0,3, gemischt wird, und iii) gegebenenfalls weitere Zusatzstoffe eingetragen werden.

Als wäßrige Lösung eignen sich beispielsweise Wasser, aber auch wäßrige Lösungen geeigneter Säuren oder Salze.

Pigmente werden vorzugsweise in Form einer Pigmentpaste unter Rühren in die wäßrige Bindemitteldispersion eingearbeitet. Die Herstellung von Pigmentpasten ist allgemein bekannt und beispielsweise in EP 0505445B1 beschrieben.

Ein weiterer Gegenstand der vorliegenden Erfindung ist die Verwendung der erfindungsgemäßen Beschichtungszusammensetzung. Die erfindungsgemäße Beschichtungszusammensetzung kann zur Beschichtung elektrisch leitfähiger Substrate verwendet werden, insbesondere mittels kathodischer Elektrotauchlackierung. Bevorzugt wird die erfindungsgemäße Beschichtungszusammensetzung zur Beschichtung metallischer Substrate, beispielsweise von Substraten aus Stahl, Aluminium, Kupfer, Legierungen daraus oder dergleichen, noch-bevorzugter zur Beschichtung phosphatierter metallischer Substrate, noch bevorzugter zur Beschichtung von phosphatiertem Stahl und ganz besonders bevorzugt zur Beschichtung von Kraftfahrzeugkarosserien oder Teilen davon verwendet.

Unter kathodischer Elektrotauchlackierung wird ein Verfahren zur Beschichtung elektrisch leitfähiger Substrate verstanden, bei dem
1) das Substrat in einen wäßrigen Elektrotauchlack, der mindestens ein kathodisch abscheidbares Bindemittel enthält, eingetaucht wird,
2) das Substrat als Kathode geschaltet wird,
3) durch Gleichstrom ein Film auf dem Substrat abgeschieden wird,
4) das Substrat aus dem Elektrotauchlack entfernt wird, und
5) der abgeschiedene Lackfilm eingebrannt wird.
Insbesondere wird die kathodische Elektrotauchlackierung zum Grundieren von Werkstücken angewendet.

Die Temperatur des Elektrotauchbades soll üblicherweise zwischen 15 bis 40°C, bevorzugt zwischen 25 und 35°C liegen. Die angelegte Spannung kann in einem großen Bereich schwanken und kann z.B. zwischen 50 und 500 Volt liegen. Typischerweise wird aber mit Spannungen zwischen 250 und 400 Volt gearbeitet. Nach der Abscheidung wird der beschichtete Gegenstand abgespült und ist zum Einbrennen bereit. Die abgeschiedenen Lackfilme werden im allgemeinen bei Temperaturen von 130 bis 220°C über eine Zeitdauer von 8 bis 60 Minuten, vorzugsweise bei 150 bis 180°C über eine Zeitdauer von 12 bis 30 Minuten, eingebrannt.

Als metallische Substrate sind beispielsweise Substrate aus Stahl, Aluminium, Kupfer, Legierungen verschiedener Metalle oder dergleichen geeignet. Vorzugsweise werden Substrate aus Stahl verwendet. Besonders bevorzugt werden Substrate aus phosphatierten metallischen Substraten verwendet, insbesondere Substrate aus phosphatiertem Stahl. Unter phosphatierten metallischen Substraten werden metallische Substrate verstanden, die durch entsprechende chemische Vorbehandlung mit phosphathaltigen anorganischen Konversionsschichten versehen wurden. Besonders bevorzugt werden als derartige Substrate Kraftfahrzeugkarosserien oder Teile davon.

Daher ist ein weiterer Gegenstand der vorliegenden Erfindung ein mit der erfindungsgemäßen Beschichtungszusammensetzung beschichtetes Substrat, insbesondere ein metallisches Substrat, wie bespielsweise ein Substrat aus Stahl, Aluminium, Kupfer, Legierungen verschiedener Metalle oder dergleichen, bevorzugt ein Substrat aus phosphatiertem Metall, insbesondere aus phosphatiertem Stahl. Ganz besonders bevorzugt sind mit der erfindungsgemäßen Beschichtungszusammensetzung beschichtete Kraftfahrzeugkarosserien oder Teile davon.

Die Erfindung wird in den folgenden Beispielen näher erläutert. Alle Angaben über Teile und Prozentsätze sind Gewichtsangaben, falls nicht ausdrücklich etwas anderes festgestellt wird.

### Ausführungsbeispiel

### Herstellbeispiel 1 (Vernetzer)

Verwendet wird der Vernetzer aus EP 0961797 B1 (S. 6 Z. 43 - 52). In einem Reaktor, der mit einem Rührer, Rückflußkühler, Innenthermometer und Inertgaseinleitung ausgestattet ist, werden 1084 g Isomere und höherfunktionelle Oligomere auf Basis von 4,4'-Diphenylmethandiisocyanat mit einem NCO-Equivalentgewicht von 135 (Basonat^{R} A270, Fa. BASF; NCO-Funktionalität ca. 2,7; Gehalt an 2,2'- und 2,4'-Diphenylmethandiisocyanat unter 5%) unter Stickstoffatmosphäre vorgelegt. Man gibt 2 g Dibutylzinnlaurat zu und tropft 1314 g Butyldiglycol mit einer solchen Geschwindigkeit zu, dass die Produkttemperatur unter 70°C bleibt. Gegebenenfalls muss gekühlt werden. Nach Ende der Zugabe wird die Temperatur weitere 120 min bei 70°C gehalten. Bei der nachfolgenden Kontrolle sind keine NCO-Gruppen mehr nachweisbar. Man kühlt auf 65°C ab.
Der Feststoffgehalt liegt bei > 97 % (1 h bei 130°C).

### Herstellbeispiel 2 (Bindemittel-Dispersion)

Verwendet wird die Bindemitteldispersion A aus EP 0961797 B1 (S. 7, Z. 4 - 30). In einem wärmeträgerölbeheizten Laborreaktor, ausgestattet mit Rührer, Rückflusskühler, Thermometer und Inertgaseinleitungsrohr, werden 1128 Teile eines handelsüblichen Epoxidharzes auf Basis Bisphenol A mit einem Epoxidäquivalentgewicht (EEW) von 188; 262 Teile Dodecylphenol, 31,4 Teile Xylol und 228 Teile Bisphenol A vorgelegt und unter Stickstoff auf 127°C aufgeheizt. Unter Rühren werden 1,6 g Triphenylphosphin zugegeben, worauf eine exotherme Reaktion eintritt und die Temperatur auf 160°C steigt. Man lässt wieder auf 130°C abkühlen und kontrollliert anschliessend den Epoxidgehalt. Das EEW von 532 zeigt an, dass > 98% der phenolischen OH-Gruppen reagiert haben. Sodann werden 297,5 Teile Pluriol® P 900 (Polypropylenglykol MW 900, BASF) unter gleichzeitiger Kühlung zugegeben. 5 Minuten später gibt man bei 120°C unter weiterer Kühlung 105 Teile Diethanolamin zu. Wenn nach kurzzeitiger Exothermie (Tₘₐₓ 127°C) die Temperatur auf 110°C gesunken ist (30 Min.), gibt man 51 Teile N,N-Dimethylaminopropylamin zu. Nach kurzzeitiger Exothermie (Tₘₐₓ 140°C) lässt man den Ansatz für 2 Stunden bei 130°C weiterreagieren, bis die Viskosität konstant bleibt (1,8 dPas, Platte-Kegel-Viskosimeter bei 23°C, 40%-ig in Solvenon PM (BASF)). Sodann gibt man unter gleichzeitiger Kühlung 58,5 Teile Butylglykol und 887,8 Teile des Vernetzers (Herstellbeispiel 1) zu und trägt bei 105°C aus.
2100 Teile der noch heissen Mischung werden unverzüglich in einer vorgelegten Mischung aus 1945 Teilen vollentsalztem Wasser (VE-Wasser) und 33,1 Teilen Eisessig unter intensivem Rühren dispergiert. Nach kurzem Homogenisieren wird mit weiteren 1404 Teilen VE-Wasser verdünnt und über Plattenfilter K900 (Fa. Seitz) filtriert. Die Dispersion hat folgende Kennzahlen:
Festkörper (1 h bei 130°C): 35,7%
MEQ-Base= 0,657 meq/g Festharz
MEQ-Säure = 0,283 meq/g Festharz
pH = 5,4
Mittlere Teilchengröße =1250 (Lichtstreumethode)
Absetzstabilität = nach 3 Monaten Lagerzeit bei Raumtemperatur kein Bodensatz
Viskosität =14 sec. (DIN4 Becher bei 23°C)

### Herstellbeispiel 3 (Reibharz)

Verwendet wird das Reibharz A aus EP 0961797 (S. 9, Z. 17 - 21). In einem mit Rührwerk, Innenthermometer, Stickstoffeinlass und Wasserabscheider mit Rückflusskühler ausgestatteten Reaktor werden 30,29 Teile eines Epoxidharzes auf Basis Bisphenol A mit einem Epoxidequivalentgewicht (EEW) von 188; 9,18 Teile Bisphenol A, 7,04 Teile Dodecylphenol und 2,37 Teile Butylglykol vorgelegt. man heizt auf 110°C auf, fügt 1,85 Teile Xylol zu und destilliert dieses unter schwachem Vakuum zusammen mit möglichen Wasserspuren wieder ab. Sodann gibt man 0,07 Teile Triphenylphosphin zu und heizt auf 130°C auf. Nach exothermer Wärmetönung auf 150°C lässt man bei 130°C noch 1 h nachreagieren. Das EEW der Reaktionsmischung liegt dann bei 860. Man kühlt und gibt währenddessen 9,91 Teile Butylglykol und 17,88 Teile eines Polypropylenglykoldiglycidylethers mit EEW 333 (DER®732, Dow Chemicals) zu. Bei 90°C werden 4,23 Teile 2-2'-Aminoethoxyethanol (H₂N-CH₂-CH₂-O-CH₂-CH₂-OH) und 10 min. später 1,37 Teile N,N-Dimethylaminopropylamin zugefügt. Die Reaktionsmischung wird nach kurzzeitiger

Exothermie noch für 2 h bei 90°C gehalten, bis die Viskosität konstant bleibt, und anschliessend wird mit 17,66 Teilen Butylglykol verdünnt. Das Harz hat einen Festkörper von 69,8% (gemessen 1 h bei 130°C) und eine Viskosität von 5,5 dPas (gemessen an einer 40%-igen mit Propylenglykolmonomethylether (Solvenon® PM, BASF) verdünnten Harzlösung am Platte-Kegel-Viskosimeter bei 23°C). Das Harz wird der besseren Handhabung wegen zusätzlich mit 2,82 Teilen Eisessig und 13,84 Teilen VE-Wasser neutralisiert und verdünnt. Der ursprüngliche Festgehalt wird dadurch auf 60% abgesenkt.

### Herstellbeispiel 4 (wässrige Pigmentpaste)

Die wässrige Pigmentpaste wird analog zu dem in EP 0505445 B1 (S. 10, Z. 35 - 41) beschriebenen Verfahren aus 25 Teilen des Reibharzes aus Herstellbeispiel 3; 6 Teilen Aluminiumsilikat, 0,6 Teilen Russ, 38,1 Teilen Titandioxid, 2,7 Teilen Dibutylzinnoxid und 27,1 Teilen entionisiertem Wasser hergestellt. Dazu werden zunächst entionisiertes Wasser und das Reibharz vorgemischt. Dann fügt man die übrigen Bestandteile hinzu und mischt 30 min. lang unter einem schnellaufenden Dissolverrührwerk. Anschliessend wird die Mischung in einer Laborkleinmühle während 1 bis 1,5 h bis zu einer Hegmann-Feinheit von kleiner 12 dispergiert.

### Beispiel (wässrige Beschichtungszusammensetzung)

Zur Herstellung einer herkömmlichen (I) und einer erfindungsgemäßen (II) Beschichtungszusammensetzung werden die Bindemitteldispersion aus Herstellbeispiel 2 und die in Tabelle 1 aufgeführten Bestandteile kombiniert. Man verfährt dabei so, dass die Bindemitteldispersion vorgelegt und mit entionisiertem Wasser verdünnt wird. Zur erfindungsgemäßen, nicht aber zur herkömmlichen Beschichtungszusammensetzung wird weiterhin eine 30%-ige wässrige Lösung eines handelsübliche Vinylpyrrolidon-Vinylacetat-Copolymers (Collacral® VAL, BASF) zugegeben. Anschließend wird unter Rühren die Pigmentpaste eingetragen. Die angegebenen Werte entsprechen Gewichtsanteilen (g).

| **Tabelle 1** | Beschichtungszusammensetzung | |
|---|---|---|
| | herkömmliche (I) | erfindungsgemäß (II) |
| VE-Wasser | 2448 | 2433 |
| Bindemitteldispersion (Herstellbeispiel 2) | 2332 | 2332 |
| wässrige Pigmentpaste (Herstellbeispiel 4) | 270 | 270 |
| Vinylpyrrolidon-Vinylacetat-Copolymer-Lösung (30% in Wasser; Gollacral® VAL, BASF) | - | 15 |

Man lässt die Beschichtungszusammensetzungen 3 Tage bei Raumtemperatur unter Rühren altern, bevor sie zur kathodischen Elektrotauchlackierung verwendet werden. Die Abscheidung der Lackfilme erfolgt unter den in Tabelle 2 angegebenen Parametern auf kathodisch geschalteten zinkphosphatierten Stahlprüftafeln ohne Cr(VI)-Nachspülung in der Vorbehandlung.

| **Tabelle 2** | Tauchbad 1 | Tauchbad 2 |
|---|---|---|
| Beschichtungszusammensetzung | herkömmliche (I) | erfindungsgemäße (II) |
| Badtemperatur | 32°C | 32°C |
| pH-Wert | 5,71 | 5,78 |
| Spannung (V) | 320 | 320 |
| Leitwert (mS/cm) | 1,79 | 1,81 |
| erhaltene Schichtdicke (µm) | 20 | 21 |

Die abgeschiedenen Lackfilme werden mit entionisiertem Wasser nachgespült und während 15 Minuten bei 175°C (Objekttemperatur) eingebrannt.

### Prüfung auf Ausläufer

Mit der folgenden Vorschrift kann das Entstehen von Ausläufermarkierungen im Labor nachgestellt werden.

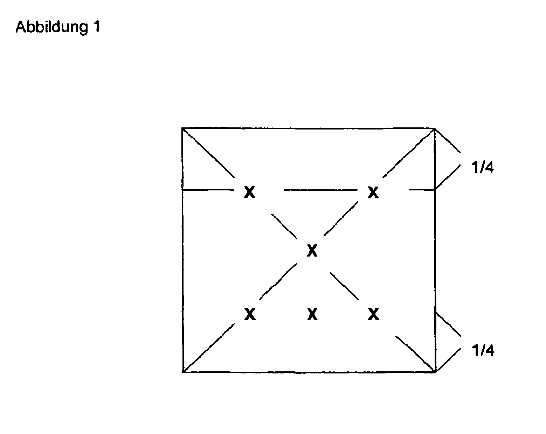

Zunächst werden die Prüfkörper hergestellt. Dazu wird am oberen Ende eines großen Bleches (phosphatiertes 10,5 cm x 30 cm Prüfblech) eine quadratische Fläche markiert (Seitenlänge = Breite des Blechs). Anschließend wird auf diese Fläche ein zweites, kleineres Prüfblech (phosphatiertes 10,5 cm x 19 cm Prüfblech) wie folgt aufgeklebt. Mit einer Schablone werden die vorgesehenen Klebestellen (x) wie in der Abbildung 1 gezeigt auf dem großen Prüfblech festgelegt. Auf jede Klebestelle (x) wird zunächst etwas Zweikomponentenkleber (UHU® plus sofort fest) gegeben, dann darauf ein Stahlring (DIN/ISO 988, Innenradius 6 mm, Außenradius 12 mm, Höhe 0,1 mm) gelegt und der Kleber wird etwas verstrichen. Nun wird das zweite, kleinere Blech so auf die Klebestellert auf dem größeren Blech geklebt, dass die Unterkante des kleineren Blechs mit der Unterkante des auf dem größeren Blech markierten quadratischen Abschnitts abschließt. Damit entsteht ein Hohlraum zwischen den Blechen. Während des Klebevorgangs werden die Bleche mit 500 g Gewicht beschwert.

Vor dem Beschichten werden die so angefertigten Prüfkörper zunächst 2 Minuten in vollentsalztes Wasser eingetaucht. Das Elektrotauchbad wird auf die gewünschte Beschichtungstemperatur (32°C) erhitzt.-Auf den jeweils als Kathode geschalteten Prüfkörpern wird ein Lackfilm wie oben beschrieben abgeschieden. Die Prüfkörper werden hiernach mit fließendem vollentsalztem Wasser gründlich abgespült. Die Prüfkörper werden 5 Minuten abgelüftet (23 - 25°C, ohne Luftstrom) und hängend eingebrannt. Die Anzahl, Länge, Breite und Plastizität der aus dem Hohlraum austretenden Ausläufer wird bestimmt. Die Ergebnisse sind in Tabelle 3 wiedergegeben.

| **Tabelle 3** | Tauchbad 1 | Tauchbad 2 |
|---|---|---|
| Beschichtungszusammensetzung | herkömmliche (I) | erfindungsgemäße (II) |
| Anzahl der Ausläufer | 5 | 2 |
| Breite der Ausläufer (mm) | 4 | 2 |
| Länge der Ausläufer (cm) | 9 | 6 |
| Plastizität der Ausläufer | erhaben | flach |

Die Ergebnisse zeigen, dass die Anzahl, Länge, Breite und Plastizität der aus dem Hohlraum austretenden Ausläufer bei Verwendung der erfindungsgemäßen Beschichtungszusammensetzung im Vergleich zur Verwendung einer herkömmlichen Beschichtungszusammensetzung deutlich reduziert sind.

## Patentansprüche

1. Wässrige Beschichtungszusammensetzung enthaltend (A) mindestens ein in Wasser dispergierbares, kationische Gruppen enthaltendes organisches Bindemittel, und (B) 0,05 - 10 Gew.%, bezogen auf den Festkörpergehalt der wässrigen Beschichtungszusammensetzung, eines wasserverdünnbaren Vinylpyrrolidon-Copolymers, **dadurch gekennzeichnet, dass** das Vinylpyrrolidon-copolymer (B) Vinylpyrrolidon-Monomer-Einheiten und Vinylacetat-Monomer-Einheiten in einem molaren Verhältnis von 0,3 : 0,7 bis 0,7 : 0,3 aufweist und ein gewichtsmittleres Molekulargewicht von weniger als 200.000 g/mol besitzt.

2. Wässrige Beschichtungszusammensetzung nach Anspruch 1, **dadurch gekennzeichnet, dass** es sich um einen kathodisch abscheidbaren Elektrotauchlack handelt.

3. Wässrige Beschichtungszusammensetzung nach Anspruch 1 oder 2, **dadurch gekennzeichnet, dass** 60 - 95 Gew.%, bezogen auf den Festkörpergehalt der wässrigen Beschichtungszusammensetzung, mindestens eines Bindemittels (A) enthalten sind.

4. Wässrige Beschichtungszusammensetzung nach einem oder mehreren der Ansprüche 1 bis 3, **dadurch gekennzeichnet, dass** das Bindemittel (A) primäre, sekundäre, tertiäre oder quartäre Amino- und/oder Ammoniumgruppen enthält;

5. Wässrige Beschichtungszusammensetzung nach einem oder mehreren der Ansprüche 1 bis 4, **dadurch gekennzeichnet, dass** das Bindemittel (A) ein aminmodifiziertes Epoxidharz ist.

6. Wässrige Beschichtungszusammensetzung nach einem oder mehreren der Ansprüche 1 bis 5, **dadurch gekennzeichnet, dass** mindestens ein Bindemittel (A) aus einer wässrigen Bindemitteldispersion erhältlich durch
i) Umsetzung
1) eines Vorproduktes, das unter Zusatz von Phosphinen und/oder Phosphinsalzen als Katalysator herstellbar ist aus a) einer Diepoxidverbindung oder einem Gemisch von Diepoxidverbindungen und b) Monophenol, Diphenol oder einem Gemisch von Mono- und Diphenolen
2) mit wenigstens einem organischen Amin oder einer Mischung aus organischen Aminen bei auf 60 bis 130°C reduzierten Zugabetemperaturen zu einem Epoxid-Amin-Addukt,
ii) anschließende oder gleichzeitige Umsetzung der sekundären Hydroxylgruppen, die bei der Umsetzung der Komponenten a) und b) gebildet worden sind, mit Epoxidgruppen des Epoxid-Amin-Adduktes aus Stufe i) bei einer Temperatur von 110 bis 150°C,
iii) Zusatz eines Vernetzungsmittels oder eines Gemischs verschiedener Vernetzungsmittel bei einer Temperatur von <150°C,
iv) Neutralisierung und
v) Dispergierung der in den Stufen i) bis iv) erhaltenen Mischung in Wasser, besteht.

7. Wässrige Beschichtungszusammensetzung nach einem oder mehreren der Ansprüche 1 bis 6, **dadurch gekennzeichnet, dass** 0,1 - 5 Gew.%, bezogen auf den Festkörpergehalt der wässrigen Beschichtungszusammensetzung, des Vinylpyrrolidon-Copolymers (B) enthalten sind.

8. Wässrige Beschichtungszusammensetzung nach einem oder mehreren der Ansprüche 1 bis 7, **dadurch gekennzeichnet, dass** das Vinylpyrrolidon-Copolymer (B) ein gewichtsmittleres Molekulargewicht von 30.000 - 170.000 g/Mol besitzt.

9. Wässrige Beschichtungszusammensetzung nach einem oder mehreren der Ansprüche 1 bis 8, **dadurch gekennzeichnet, dass** das Vinylpyrrolidon-Copolymer (B) Vinylpyrrolidon-Monomer-Einheiten und Vinylacetat-Monomer-Einheiten in einem molaren Verhältnis von 0,4 : 0,6 bis 0,6 : 0,4 aufweist.

10. Wässrige Beschichtungszusammensetzung nach einem oder mehreren der Ansprüche 1 bis 9, **dadurch gekennzeichnet, dass** sie 18 bis 28 Gew.%, bezogen auf den Festkörpergehalt der wässrigen Beschichtungszusammensetzung, mindestens eines Vernetzungsmittels enthält.

11. Wässrige Beschichtungszusammensetzung nach einem oder mehreren der Ansprüche 1 bis 10, **dadurch gekennzeichnet, dass** sie 5 bis 40 Gew.%, bezogen auf den Festkörpergehalt der wässrigen Beschichtungszusammensetzung, mindestens eines Pigments enthält.

12. Verfahren zur Herstellung einer wässrigen Beschichtungszusammensetzung nach einem oder mehreren der Ansprüche 1 bis 11, **dadurch gekennzeichnet, dass** i) mindestens ein in Wasser dispergierbares, kationische Gruppen enthaltendes organisches Bindemittel (A) in einer wässrigen Lösung dispergiert wird, wodurch eine wässrige Bindemitteldispersion erhalten wird, ii) die wässrige Bindemitteldispersion mit 0,05 bis 10 Gew.%, bezogen auf den Festkörpergehalt der wässrigen Beschichtungszusammensetzung, eines wasserverdünnbaren Vinylpyrrolidon-Copolymers (B) mit einem gewichtsmittleren Molekulargewicht von weniger als 200.000 g/mol, hergestellt aus Vinylpyrrolidon-Monomer-Einheiten und Vinylacetat-Monomer-Einheiten in einem molaren Verhältnis von 0,3 : 0,7 bis 0,7 : 0,3, gemischt wird, und iii) gegebenenfalls weitere Zusatzstoffe eingetragen werden.

13. Verwendung einer wässrigen Beschichtungszusammensetzung nach einem oder mehreren der Ansprüche 1 bis 11 zur Beschichtung elektrisch leitfähiger Substrate mittels kathodischer Elektrotauchlackierung.

14. Verwendung einer wässrigen Beschichtungszusammensetzung nach Anspruch 13, wobei die Substrate Kraftfahrzeugkarosserien oder Teile davon sind.

15. Beschichtete metallische Substrate, die mit einer wässrigen Beschichtungszusammensetzung nach einem oder mehreren der Ansprüche 1 bis 11 beschichtet wurden.

## Claims

1. Aqueous coating composition comprising (A) at least one water-dispersible organic binder containing cationic groups and (B) 0.05% - 10% by weight, based on the solids content of the aqueous coating composition, of a water-thinnable vinylpyrrolidone copolymer, **characterized in that** the vinylpyrrolidone copolymer (B) contains vinylpyrrolidone monomer units and vinyl acetate monomer units in a molar ratio of 0.3 : 0.7 to 0.7 : 0.3 and possesses a weight-average molecular weight of less than 200 000 g/mol.

2. Aqueous coating composition according to Claim 1, **characterized in that** it is a cathodically depositable electrodeposition primer.

3. Aqueous coating composition according to Claim 1 or 2, **characterized in that** 60% - 95% by weight, based on the solids content of the aqueous coating composition, of at least one binder (A) are present.

4. Aqueous coating composition according to one or more of Claims 1 to 3, **characterized in that** the binder (A) contains primary, secondary, tertiary or quaternary amino and/or ammonium groups.

5. Aqueous coating composition according to one or more of Claims 1 to 4, **characterized in that** the binder (A) is an amine-modified epoxy resin.

6. Aqueous coating composition according to one or more of Claims 1 to 5, **characterized in that** at least one binder (A) consists of an aqueous binder dispersion obtainable by
i) reacting
1) a precursor preparable with addition of phosphines and/or phosphine salts as catalyst from a) a diepoxide compound or a mixture of diepoxide compounds and b) monophenol, diphenol or a mixture of monophenols and diphenols,
2) with at least one organic amine or a mixture of organic amines at addition temperatures reduced to 60 to 130°C, to form an epoxide-amine adduct,
ii) subsequently or simultaneously reacting the secondary hydroxyl groups formed in the reaction of components a) and b) with epoxide groups of the epoxide-amine adduct from stage i), at a temperature of 110 to 150°C,
iii) adding a crosslinking agent or a mixture of different crosslinking agents at a temperature of < 150°C,
iv) carrying out neutralization, and
v) dispersing the mixture obtained in stages i) to iv) in water.

7. Aqueous coating composition according to one or more of Claims 1 to 6, **characterized in that** 0.1% - 5% by weight, based on the solids content of the aqueous coating composition, of the vinylpyrrolidone copolymer (B) are present.

8. Aqueous coating composition according to one or more of Claims 1 to 7, **characterized in that** the vinylpyrrolidone copolymer (B) possesses a weight-average molecular weight of 30 000 - 170 000 g/mol.

9. Aqueous coating composition according to one or more of Claims 1 to 8, **characterized in that** the vinylpyrrolidone copolymer (B) contains vinylpyrrolidone monomer units and vinyl acetate monomer units in a molar ratio of 0.4 : 0.6 to 0.6 : 0.4.

10. Aqueous coating composition according to one or more of Claims 1 to 9, **characterized in that** it comprises 18% to 28% by weight, based on the solids content of the aqueous coating composition, of at least one crosslinking agent.

11. Aqueous coating composition according to one or more of Claims 1 to 10, **characterized in that** it comprises 5% to 40% by weight, based on the solids content of the aqueous coating composition, of at least one pigment.

12. Process for preparing an aqueous coating composition according to one or more of Claims 1 to 11, **characterized in that** i) at least one water-dispersible organic binder (A) containing cationic groups is dispersed in an aqueous solution to give an aqueous binder dispersion, ii) the aqueous binder dispersion is mixed with 0.05% to 10% by weight, based on the solids content of the aqueous coating composition, of a water-thinnable vinylpyrrolidone copolymer (B) having a weight-average molecular weight of less than 200 000 g/mol, prepared from vinylpyrrolidone monomer units and vinyl acetate monomer units in a molar ratio of 0.3 : 0.7 to 0.7 : 0.3, and iii) optionally, further additives are introduced.

13. Use of an aqueous coating composition according to one or more of Claims 1 to 11 to coat electrically conductive substrates by means of cathodic electrodeposition coating.

14. Use of an aqueous coating composition according to Claim 13, the substrates being motor vehicle bodies or parts thereof.

15. Coated metallic substrates which have been coated with an aqueous coating composition according to one or more of Claims 1 to 11.

## Revendications

1. Composition aqueuse de revêtement, contenant (A) au moins un liant organique contenant des groupes cationiques, dispersible dans l'eau, et (B) 0,05-10% en poids, par rapport à la teneur en solides de la composition aqueuse de revêtement, d'un copolymère de vinylpyrrolidone diluable à l'eau, **caractérisée en ce que** le copolymère de vinylpyrrolidone (B) présente des unités monomères de vinylpyrrolidone et des unités monomères d'acétate de vinyle dans un rapport molaire de 0,3:0,7 à 0,7:0,3 et présente un poids moléculaire pondéral moyen inférieur à 200 000 g/mole.

2. Composition aqueuse de revêtement selon la revendication 1, **caractérisée en ce qu'**il s'agit d'une laque d'électrodéposition, pouvant être déposée par voie cathodique.

3. Composition aqueuse de revêtement selon la revendication 1 ou 2, **caractérisée en ce qu'**elle contient 60-95% en poids, par rapport à la teneur en solides de la composition aqueuse de revêtement, d'au moins un liant (A).

4. Composition aqueuse de revêtement selon l'une ou plusieurs des revendications 1 à 3, **caractérisée en ce que** le liant (A) contient des groupes amino et/ou ammonium primaire, secondaire, tertiaire ou quaternaire.

5. Composition aqueuse de revêtement selon l'une ou plusieurs des revendications 1 à 4, **caractérisée en ce que** le liant (A) est une résine époxyde modifiée par amine.

6. Composition aqueuse de revêtement selon l'une ou plusieurs des revendications 1 à 5, **caractérisée en ce qu'**au moins un liant (A) est constitué par une dispersion aqueuse de liant, pouvant être obtenue par
i) transformation
1) d'un précurseur, qui peut être préparé, avec addition de phosphines et/ou de sels de phosphine comme catalyseur, à partir de a) un composé diépoxyde ou un mélange de composés diépoxyde et b) un monophénol, un diphénol ou un mélange de monophénols et de diphénols
2) avec au moins une amine organique ou un mélange d'amines organiques à des températures d'addition réduites à 60 jusqu'à 130°C en un produit d'addition époxyde-amine,
ii) transformation consécutive ou simultanée des groupes hydroxyle secondaires, qui ont été formés lors de la transformation des composants a) et b), avec des groupes époxyde du produit d'addition époxyde-amine de l'étape i) à une température de 110 à 150°C,
iii) addition d'un réticulant ou d'un mélange de différents réticulants à une température < 150°C,
iv) neutralisation et
v) dispersion du mélange obtenu dans les étapes i) à iv).

7. Composition aqueuse de revêtement selon l'une ou plusieurs des revendications 1 à 6, **caractérisée en ce qu'**elle contient 0,1-5% en poids, par rapport à la teneur en solides de la composition aqueuse de revêtement, du copolymère de vinylpyrrolidone (B).

8. Composition aqueuse de revêtement selon l'une ou plusieurs des revendications 1 à 7, **caractérisée en ce que** le copolymère de vinylpyrrolidone (B) présente un poids moléculaire pondéral moyen de 30 000-170 000 g/mole.

9. Composition aqueuse de revêtement selon l'une ou plusieurs des revendications 1 à 8, **caractérisée en ce que** le copolymère de vinylpyrrolidone (B) présente des unités monomères de vinylpyrrolidone et des unités monomères d'acétate de vinyle dans un rapport molaire de 0,4:0,6 à 0,6:0,4.

10. Composition aqueuse de revêtement selon l'une ou plusieurs des revendications 1 à 9, **caractérisée en ce qu'**elle contient 18 à 28% en poids, par rapport à la teneur en solides de la composition aqueuse de revêtement, d'au moins un réticulant.

11. Composition aqueuse de revêtement, selon l'une ou plusieurs des revendications 1 à 10, **caractérisée en ce qu'**elle contient 5 à 40% en poids, par rapport à la teneur en solides de la composition aqueuse de revêtement, d'au moins un pigment.

12. Procédé pour la préparation d'une composition aqueuse de revêtement selon l'une ou plusieurs des revendications 1 à 11, **caractérisé en ce que** i) au moins un liant organique (A) contenant des groupes cationiques, dispersible dans l'eau est dispersé dans une solution aqueuse, suite à quoi une dispersion aqueuse de liant est obtenue, ii) la dispersion aqueuse de liant est mélangée avec 0,05 à 10% en poids, par rapport à la teneur en solides de la composition aqueuse de revêtement, d'un copolymère de vinylpyrrolidone diluable à l'eau (B) présentant un poids moléculaire pondéral moyen inférieur à 200 000 g/mole, préparé à partir d'unités monomères de vinylpyrrolidone et d'unités monomères d'acétate de vinyle dans un rapport molaire de 0,3:0,7 à 0,7:0,3, et iii) d'autres additifs sont le cas échéant introduits.

13. Utilisation d'une composition aqueuse de revêtement selon l'une ou plusieurs des revendications 1 à 11 pour le revêtement de substrats électriquement conducteurs au moyen d'un laquage par électrodéposition cathodique.

14. Utilisation d'une composition aqueuse de revêtement selon la revendication 13, les substrats étant des carrosseries de véhicules automobiles ou des parties de celles-ci.

15. Substrats métalliques revêtus, qui ont été revêtus par une composition aqueuse de revêtement selon l'une ou plusieurs des revendications 1 à 11.
